# EUROPEAN PATENT SPECIFICATION

(11) **EP 2 202 901 B1**
(45) Date of publication and mention of the grant of the patent: **04.10.2017**
(21) Application number: 08792305.8
(22) Date of filing: 07.08.2008
(51) Int. Cl.: H04J 11/00, H04J 1/00, H04W 24/00, H04W 4/00, H04L 1/00, H04L 5/00, H04L 27/26

(54) **COMMUNICATION DEVICE AND RECEPTION QUALITY INFORMATION GENERATION METHOD**
KOMMUNIKATIONSEINRICHTUNG UND VERFAHREN ZUR ERZEUGUNG VON EMPFANGSQUALITÄTSINFORMATIONEN
DISPOSITIF DE COMMUNICATION ET PROCÉDÉ DE GÉNÉRATION D'INFORMATIONS DE QUALITÉ DE RÉCEPTION

(30) Priority: 07.08.2007 JP 2007205119
(43) Date of publication of application: 30.06.2010
(73) Proprietor: Sharp Kabushiki Kaisha, Sakai City, Osaka 590-8522 (JP)
(72) Inventor: HAMAGUCHI, Yasuhiro, Osaka 590-8522 (JP); NAMBA, Hideo, Osaka 590-8522 (JP); TO, Shimpei, Osaka 590-8522 (JP); YOKOMAKURA, Kazunari, Osaka 590-8522 (JP)
(74) Representative: Müller Hoffmann & Partner
(86) International application number: PCT/JP2008/064198
(87) International publication number: WO 2009/020174

(56) References cited:
- WO-A1-2004/059891
- WO-A1-2006/049123
- WO-A1-2007/015529
- JP-A- 2001 238 269
- JP-A- 2004 128 661
- JP-A- 2005 073 259
- US-A1- 2006 067 417
- US-A1- 2006 116 078
- LG ELECTRONICS: 'DCT based CQI reporting scheme' 3GPP TSG RAN WG1 LTE AD HOC, R1-061777 30 June 2006, pages 1 - 11, XP050111597
- ERICSSON: 'E-UTRA Incremental CQI Reporting Using DCT Coding' TSG-RAN WG1 #46, R1-062278 01 September 2006, XP050102804

## Description

### Technical Field

The present invention relates to a communication apparatus for performing communications using a plurality of subcarriers, and a reception quality information generating method for generating reception quality information indicative of reception quality of a received signal.

### Background Art

With increases in data communication amount in recent years, the need has been increasing for mobile communication systems with higher spectral efficiency, and various techniques have been proposed to actualize the need. One of techniques with the possibility of enhancing spectral efficiency is OFDMA (Orthogonal Frequency Division Multiple Access), and the adoption thereof has been determined in the downlink access scheme of the E-UTRA (Evolved Universal Terrestrial Radio Access) system of which standardization has proceeded in 3GPP (The 3rd Generation Partnership Project) as the leader (Non-patent Document 1).

This OFDMA system is such a system that users in a cell gain access to each resource block divided in the time and frequency domains, and enables scheduling for allocating users to resource blocks providing good quality corresponding to propagation path conditions, and control of transmission parameters such as a modulation scheme, coding rate and transmit power for each resource block (sub-channel). Herein, in order to suitably perform scheduling of users and control of the modulation scheme and coding rate for each resource block, the transmissions side needs to recognize propagation path conditions on the reception side. Therefore, the need arises on the reception side to notify (give feedback) the transmission side of reception conditions. Such feedback information concerning the propagation path conditions is called CQI (Channel Quality Indicator) in the E-UTRA system.

As described above, the reception side needs to give feedback of CQI to the transmission side in adaptive control of the modulation scheme, etc. and when many CQIs undergo feedback, there is a problem that uplink spectral efficiency remarkably reduces. As one of means for solving the problem, there is a CQI compression method using DCT (Discrete Cosine Transform) (Non-patent Document 2).

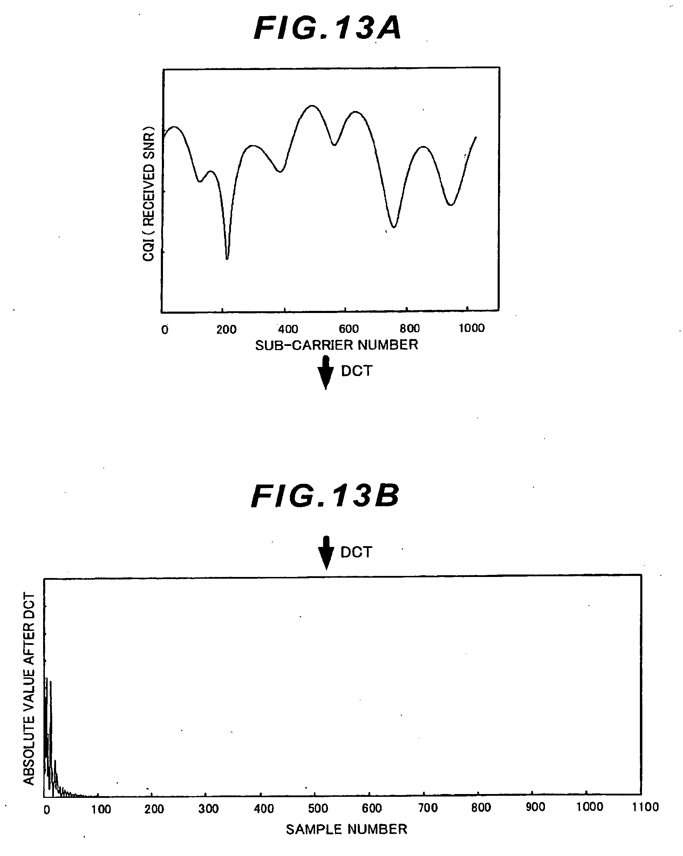

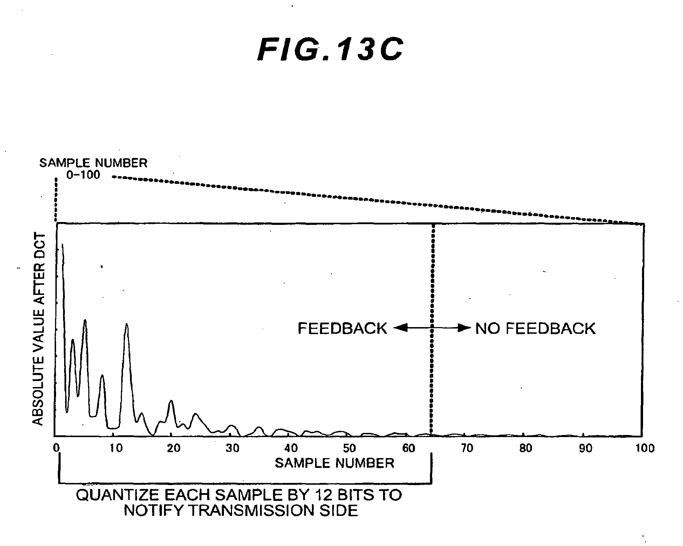

FIG. 13A is a graph showing the CQI (1024 subcarriers) varying continuously in the frequency region. When the CQI is subjected to DCT processing (1024 points), DCT-processed signal components gather around the low-frequency region, and components with high frequencies are extremely low values (values near zero). FIG. 13B is a graph showing DCT-processed signal components. Non-patent Document 2 shows techniques of using such properties and compressing the feedback amount of CQI by providing feedback only about components with low frequencies without providing feedback about high-frequency components of the DCT-processed signal. FIG. 13C is a graph showing the outline of compression of the feedback amount of CQI. The transmission side receives such compressed CQI, inserts zero in sample points of deleted high-frequency components to perform IDCT processing, and is thereby capable of reproducing the CQI observed on the reception side while hardly undergoing the effect of the deleted high-frequency components.

Non-patent Document 1: 3GPP, TR 25. 814 v0. 3. 1, "Physical Layer Aspects for Evolved UTRA"

Non-patent Document 2: 3GPP, TSG RAN WG1 ad hoc meeting on LTE, R1-060228, "Sensitivity of DL/UL Performance to CQI Compression with Text Proposal"

US 2006/0116078 A1 discloses a radio transmitting apparatus of a multicarrier system in which transmission is performed simultaneously to a plurality of receiving stations using subcarriers, that divides subcarriers into blocks, selects a receiving station on a block unit basis, and varies the number of subcarriers per block adaptively for each receiving station based on the propagation environment of that receiving station.

US 2006/0067417 A1 discloses data transmission method in a MIMO-OFDM communication system including at least one receiver for receiving a signal through a plurality of reception antennas and a transmitter for selecting a transmission channel using channel information being fed back from the receiver and transmitting a signal through a plurality of transmission antennas. The method includes selecting a predetermined number of subcarriers in a frequency domain; calculating a signal-to-noise ratio (SNR) for each subcarrier-spatial mode by applying at least two spatial modes having different multiplexing gains for the selected subcarriers; determining a data rate corresponding to an SNR of each subcarrier-spatial mode using a mapping table; calculating a sum of data rates for the subcarries when the same spatial modes are applied; selecting a spatial mode having the maximum data rate sum by comparing data rate sums between spatial modes; and allocating the selected spatial mode to all subcarriers.

WO 2007/015529 A1 discloses base station apparatus including an assigning section that assigns a subchannel to a communication terminal based on a channel quality indicator reported from a communication terminal; a deciding section that decides a time left in an allowable delay time for data transmitted by the communication terminal; and a commanding section that commands the communication terminal with the time left equal to or longer than a predetermined time, to report the channel quality indicator with respect to the assigned subchannel.

### Disclosure of Invention

### Problems to be Solved by the Invention

As described above, it is possible to compress the feedback amount of CQI by deleting components with high frequencies in a signal of the result obtained by performing DCT processing on the CQI in the frequency region. However, in a system, as in the subcarrier adaptive modulation OFDMA system, for dividing the frequency region into a plurality of sub-channels, performing different modulation for each subcarrier (group) in the sub-channel, and enabling a plurality of users to access different sub-channels, the feedback amount of CQI is further increased. Moreover, the information of bands except a sub-channel used in communications is less than effective.

Meanwhile, when the method is adopted of notifying CQIs concerning subcarriers in a sub-channel desired to use, there is a case that the desired sub-channel is not allocated by convenience of scheduling (allocating sub-channels to use to terminals) on the transmission side, and in this case, a problem arises that adaptive modulation cannot be performed.

The present invention was made in view of such circumstances, and it is an object of the invention to provide a communication apparatus and reception quality information generating method for enabling CQI information to notify the transmission side to be compressed with efficiency, while minimizing the effect on scheduling on the transmission side. Means for Solving the Problem

This object is solved by the subject-matter of the independent claims. In other words, a communication apparatus of the invention is characterized by having a reception section (31-38) that receives a signal transmitted by two or more frequency channels, wherein a first frequency channel of the two or more frequency channels does not overlap with a second frequency channel of the two or more frequency channels on a frequency domain, a reception quality calculating section (50-1...50-24) that calculates a channel quality indicator, CQI, of each group of each of the first frequency channel and the second frequency channel, each of the first frequency channel and the second frequency channel being divided into two or more groups by the number of consecutive subcarriers that is independently set for each of the first frequency channel and the second frequency channel, and a transmission section (10-17) that transmits information including the calculated CQI, wherein the reception quality calculating section calculates a Signal and Interference and Noise power Ratio, SINR, the SINR indicating a reception quality of an entire frequency channel of each of the first frequency channel and the second frequency channel, and the transmission section transmits the information not including the calculated CQI of a group for which no amplitude information of the subcarriers is available.

Thus, the reception quality information indicative of reception quality of the received signal is calculated based on the information amount determined for each divided frequency band, and it is thereby possible to efficiently reduce an information amount of the reception quality information.

Further, in said communication apparatus, the information amount is determined corresponding to the reception quality in each divided frequency band.

Thus, the information amount is determined corresponding to the reception quality in each divided frequency band, and it is thereby possible to increase the information amount of the frequency band with good reception quality and/or decrease the information amount of the frequency band with poor reception quality. By this means, it is made possible to increase the information amount of the frequency band that should be used in communications, while decreasing the information amount of the frequency band that should not be used in communications, and spectral efficiency can be improved.

Further, a reception quality information generating method of the invention is characterized by including at least the steps of receiving a signal transmitted by two or more frequency channels, wherein a first frequency channel of the two or more frequency channels does not overlap with a second frequency channel of the two or more frequency channels on a frequency domain; calculating a channel quality indicator, CQI, of each group of each of the first frequency channel and the second frequency channel, each of the first frequency channel and the second frequency channel being divided into two or more groups by the number of consecutive subcarriers that is independently set for each of the first frequency channel and the second frequency channel; calculating a Signal and Interference and Noise power Ratio, SINR, the SINR indicating a reception quality of an entire frequency channel of each of the first frequency channel and the second frequency channel; and transmitting information including the calculated CQI, wherein the information does not include the calculated CQI of a group for which no amplitude information of the subcarriers is available.

By this configuration, it is possible to calculate the reception quality information indicative of reception quality of the received signal based on the information amount determined for each of the groups.

### Advantageous Effect of the Invention

According to the invention, since the reception quality information indicative of reception quality of the received signal is calculated based on the information amount determined for each divided frequency band, it is possible to efficiently reduce the information amount of reception quality information.

### Brief Description of Drawings

FIG.1 is a diagram showing a frame format used in communications in Embodiments;
FIG.2A is a block diagram showing a schematic configuration of a transmission apparatus according to the Embodiments;
FIG. 2B is a block diagram showing details of an adaptive modulation section 10 shown in FIG. 2A;
FIG. 3A is a block diagram showing a schematic configuration of a reception apparatus according to the Embodiments;
FIG. 3B is a block diagram showing details of a demodulation section 38 shown in FIG. 3A;
FIG. 4 is a block diagram showing details of a CQI estimating section according to Embodiment 1;
FIG. 5 is a block diagram showing details of an average SINR/CQI calculating section;
FIG. 6 is a block diagram showing details of a CQI estimating section according to Embodiment 2;
FIG. 7 is a diagram showing the relationship between s sub-channel number and the number of CQI samples to notify of CQI in the sub-channel;
FIG. 8 is a block diagram showing details of a CQI estimating section according to Embodiment 3;
FIG. 9 is a diagram showing the relationship between the sub-channel number and the number of CQI samples to notify;
FIG. 10 is a block diagram showing details of a CQI estimating section according to Embodiment 4;
FIG. 11 is a diagram showing the relationship between the sub-channel number and the number of CQI samples to notify in Embodiment 4;
FIG. 12 is a flowchart illustrating operations in scheduling in Embodiment 5;
FIG. 13A is a graph showing the CQI (1024 subcarriers) varying continuously in the frequency region;
FIG. 13B is a graph showing signal components subjected to DCT; and
FIG. 13C is a graph showing the outline of compression of a feedback amount of CQI.

### Description of Symbols

- 10: Adaptive modulation section
- 11: Mapping section
- 12: IFFT section
- 13: GI inserting section
- 14: D/A conversion section
- 15: Radio transmission section
- 16: Antenna section
- 17: Control section
- 20: Error correcting coding section
- 21: Data dividing section
- 22: Puncture section
- 23: Subcarrier mapping section
- 24: Modulation section
- 30: Antenna section
- 31: Radio reception section
- 32: A/D conversion section
- 33: OFDM synchronization section
- 34: FFT section
- 35: Sub-channel extracting section
- 36: Propagation path estimating section
- 37: Propagation path compensating section
- 38: Demodulation section
- 39: Control section
- 40, 60, 80, 100: CQI estimating section
- 41: Adaptive demodulation section
- 42: Demapping section
- 43: Data dividing section
- 44: Depuncture section
- 45: Error correcting decoding section
- 50-1∼50-24: Average SINR/CQI calculating section
- 51: Group determining section
- 52: SINR determining section
- 53: Average SINR calculating section
- 54: Subcarrier grouping section
- 55: CQI generating section
- 61: Data sort section
- 62-1∼62-3: First to third DCT sections
- 81: DCT section

### Best Mode for Carrying Out the Invention

Embodiments of the invention will be described below with reference to drawings. The invention is of technique applicable to communication systems having a plurality of communication units (referred to as "frequency sub-channels" or simply as "sub-channels") in the frequency-axis direction. To give explanations, this description is predicated on the subcarrier adaptive modulation OFDMA system that has currently been studied actively.

It is assumed that the number of sub-channels is 12 in the frequency-axis direction and that the number of subcarriers per sub-channel is 64. In this case, the total number of subcarriers is 768. Herein, the premise is subcarrier adaptive modulation i.e. system in which communications are performed while varying the modulation scheme and coding rate for each subcarrier, but the invention is applicable to subcarrier group adaptive modulation for grouping some subcarriers to determine the modulation scheme and coding rate. Further, a cellular system is assumed, and it is a premise that the subcarrier adaptive modulation OFDMA system shown herein is used in the downlink (communications from the base station to mobile station).

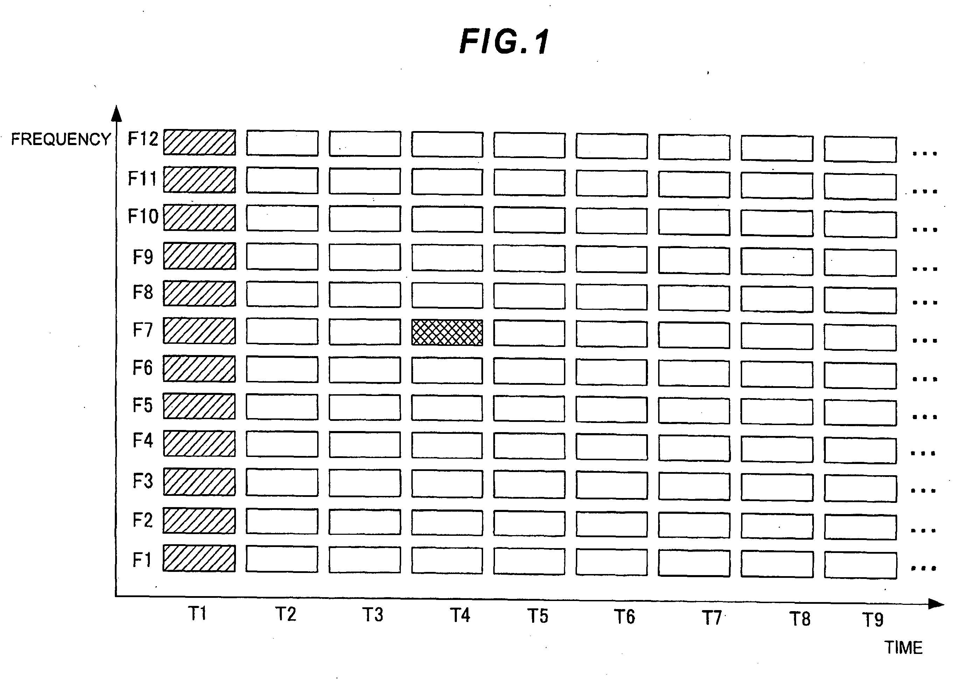

FIG. 1 is a diagram showing a frame format used in communications in Embodiments. In FIG. 1, F1 to F12 are frequency sub-channels, and T1 to T9 are time channels. A rectangle shown by the lattice pattern in the figure is identified by one frequency sub-channel (F7) and one time channel (T4), is a basic communication unit, and referred to as a resource block (RB) . In one frame exists 12x9=108RBs. It is assumed that the time channel is comprised of a plurality of OFDM symbols, and that a propagation path estimation signal is allocated at the beginning of each time channel. The first time channel is assumed to transmit control signals, and therefore, the number of RBs usable in communications is 96.

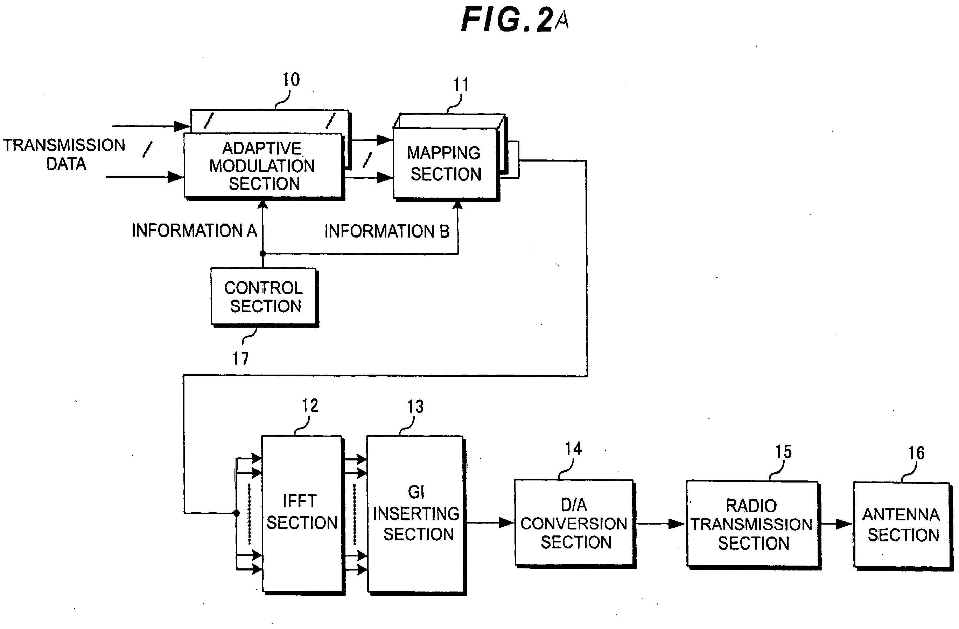

FIG. 2A is a block diagram showing a schematic configuration of a transmission apparatus according to the Embodiments. As shown in FIG. 2A, the transmission apparatus is comprised of adaptive modulation sections 10, mapping sections 11, IFFT section 12, guard interval (GI) inserting section 13, digital/analog (D/A) conversion section 14, radio transmission section 15, antenna section 16, and control section 17. To facilitate descriptions of the invention, functional blocks required for insertion of a propagation path estimation signal and control information are omitted.

Each adaptive modulation section 10 performs adaptive modulation on data to transmit. In addition, since communications are performed concurrently with a plurality of terminals in OFDMA, adaptive modulation is performed on respective transmission data to terminals communicating in a frame. To represent it, a plurality of adaptive modulation sections 10 is exemplified in the figure. The data subjected to adaptive modulation is mapped to subcarriers of a sub-channel to communicate by the mapping section 11. The adaptive modulation sections 10 and mapping sections 11 are controlled by the control section 17. The adaptive modulation section 10 receives the number of bits required for each coding rate, and a modulation scheme/coding rate for each subcarrier (information A). Further, the mapping section 11 receives the RB used by each terminal (information B).

The output data from the mapping section 11 that is modulated for each subcarrier is subjected to IFFT transform by the IFFT section 12. Further, a GI is inserted in the data in the GI inserting 13, the resultant is converted into analog data in the D/A conversion section 14, the analog data is converted into a signal with a frequency band used for transmission in the radio transmission section 15, and the signal is transmitted from the antenna section 16. This transmission apparatus constitutes the transmission section in the invention.

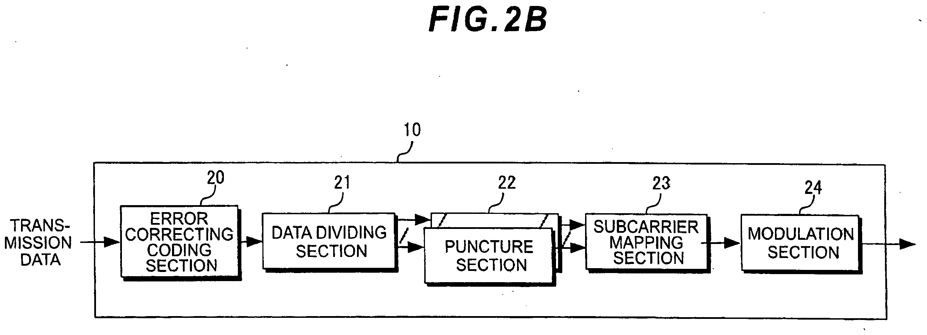

FIG. 2B is a block diagram showing details of the adaptive modulation section 10 shown in FIG. 2A. As shown in FIG. 2B, the adaptive modulation section 10 is comprised of an error correcting coding section 20, data dividing section 21, puncture section 22, subcarrier mapping section 23, and modulation section 24. As an error correcting method, convolutional codes with a coding rate of 1/2 are assumed as an example.

Input transmission data to each terminal is subjected to convolutional coding in the error correcting coding section 20. The data is divided into information amounts required for each coding rate indicated by the information A in the data dividing section 21, and each divided data is punctured according to the coding rate in the puncture section 22. Herein "puncture" means deleting part of information.

Based on the information A, the subcarrier mapping section 23 extracts data required for modulation of a subcarrier from an output signal of the puncture section 22 indicated by the coding rate of the subcarrier for each subcarrier, and assigns. The modulation section 24 performs modulation according to the modulation scheme of each subcarrier. This function enables subcarrier adaptive modulation to be actualized.

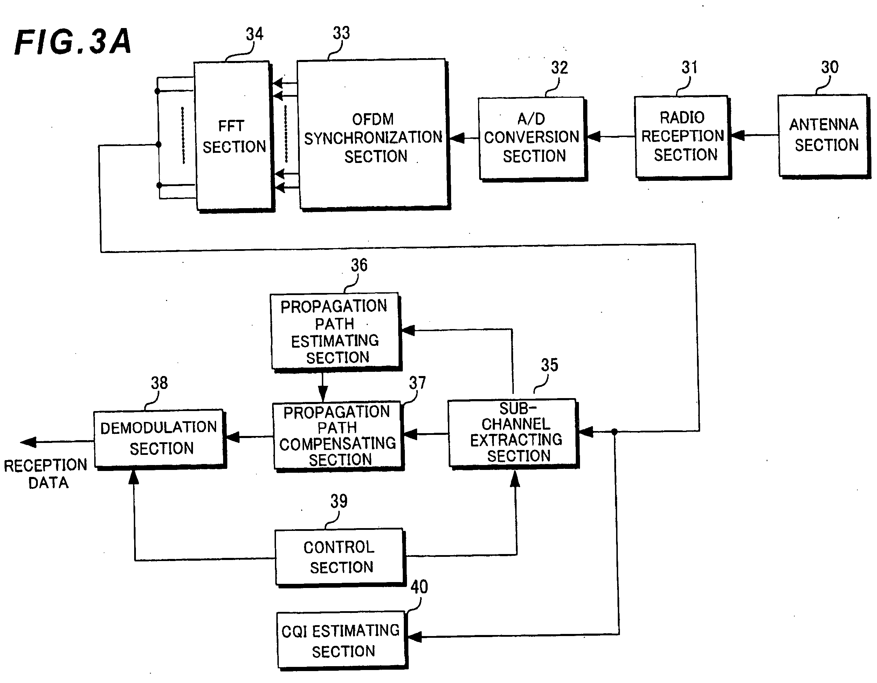

FIG. 3A is a block diagram showing a schematic configuration of a reception apparatus according to the Embodiments. As shown in FIG. 3A, the reception apparatus is comprised of an antenna section 30, radio reception section 31, A/D conversion section 32, OFDM synchronization section 33, FFT section 34, sub-channel extracting section 35, propagation path estimating section 36, propagation path compensating section 37, demodulation section 38, control section 39 and CQI (sub-Carrier Quality Information) estimating section 40.

A received OFDM signal is converted into a digital signal in the A/D conversion section 32 via the antenna section 30 and radio reception section 31. Then, OFDM symbol synchronization is acquired in the OFDM synchronization section 33, and a GI is removed concurrently. Subsequently, the digital signal is transformed into a signal in the frequency domain in the FFT section 34. The sub-channel extracting section 35 extracts a signal of a sub-channel for the terminal to receive from the transformed signal. When the signal is a propagation path estimation signal, the propagation path estimating section 36 performs propagation path estimation. When the signal is data, the propagation path compensating section 37 compensates for distortion undergoing in the propagation path based on an estimation value in the propagation path estimating section. Then, the demodulation section 38 demodulates the data. The control section 39 notifies the sub-channel extracting section 35 of information concerning the sub-channel to extract using the notified information, and notifies the demodulation section 38 of modulation information of each subcarrier in the sub-channel. This reception apparatus constitutes the reception section of the invention.

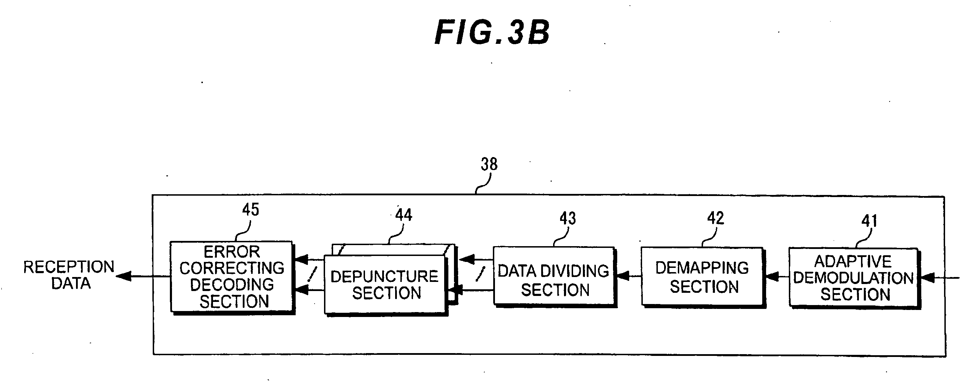

FIG. 3B is a block diagram showing details of the demodulation section 38 shown in FIG. 3A. As shown in FIG. 3B, the demodulation section 38 is comprised of an adaptive demodulation section 41, demapping section 42, data dividing section 43, depuncture section 44 and error correcting decoding section 45.

Input reception data is demodulated according to the modulation scheme of each subcarrier in the adaptive demodulation section 41. The demapping section 42 gathers the demodulated data for each coding rate to input to the data dividing section 43. The data dividing section 43 inputs the data to the depuncture section 44 according to each coding rate. The depuncture section 44 inputs dummy data to the data punctured on the transmission side according to each coding rate. Input as the dummy data is a value that does not affect any signals to demodulate. For example, when data is demodulated to two ways of "1", "-1", "0" is input. Then, the data is decoded in the error correcting decoding section 45.

The CQI estimating section 40 is a block having the function of estimating CQI for each subcarrier. In order to perform subcarrier adaptive modulation, it is necessary to notify the transmission apparatus of the CQI for each subcarrier estimated in this section. The communication scheme in the uplink on which notification is performed does not need to be described while being limited particularly, and is not described explicitly, but uplink communication efficiency is improved as the information amount of CQI decreases as much aspossible. With attention directed toward this respect, the Embodiments described below show methods to actualize a subcarrier adaptive modulation OFDMA scheme while minimizing the information amount of CQI.

In the invention, the number of levels of CQI that is quality for each subcarrier to notify is not limited, but is assumed to be represented by maximum four bits. Accordingly, to notify complete CQI, required is the information amount of 4x768=3072 bits. Further, the compression rate is defined as (amount of information to notify) /3072. According to this equation, it is meant that the compression efficiency is higher as the compression rate is lower.

### (Embodiment 1)

This Embodiment describes a method of grouping sub-channels according to sub-channel average SINR (Signal and Interference and Noise power Ratio), and varying a sample interval to notify of CQI and amplitude information for each group. Herein, the "sample interval to notify of CQI" is the maximum in the case that CQI is notified on all the subcarriers, and in other cases, means that several subcarriers are grouped and that the typical value is notified. In the following description, the number of subcarriers to group in determining the typical value of CQI is expressed as "the number of subcarriers per CQI sample". Further, the number of CQI samples to notify of CQI in a sub-channel is obtained by dividing the number of all the subcarriers in the sub-channel by the number of subcarriers per CQI sample.

In grouping subcarriers, various combinations are considered in the method of determining a typical value and the method of determining the number of subcarriers per CQI sample. For example, as the method of determining a typical value, considered is a method of grouping a plurality of continuous subcarriers and using the average CQI in the group as a typical value, or using the lowest CQI in the group as a typical value, and any methods are applicable to all the Embodiments. Further, for the number of subcarriers per CQI sample, as the number of subcarriers increases, communication efficiency of CQI is improved, but communication efficiency of the adaptive modulation OFDMA system decreases. Further, the method of determining a typical value of a subcarrier group and the number of subcarriers per CQI sample do not provide any problems, as long as the method and the number are known to the transmission and reception apparatuses by being already known to the apparatuses, or being notified between the apparatuses.

In this Embodiment, three sub-channel groups are formed in descending order of SINR. It is assumed that three, three and six sub-channels are allocated sequentially. Table 1 shows the average SINR of the sub-channel, the number of subcarriers per group and amplitude information in a terminal in some frame.

**[Table 1]**

| Sub-channel Number | Average SINR (dB) of Sub-channel | The number of Subcarriers per CQI Sample | Amplitude Information |
|---|---|---|---|
| 1 | 9 | 2 | 3 |
| 2 | 13 | 2 | 4 |
| 3 | 12 | 2 | 4 |
| 4 | 10 | 2 | 3 |
| 5 | 11 | 2 | 3 |
| 6 | 5 | 2 | 3 |
| 7 | 7 | 2 | 3 |
| 8 | 9 | 2 | 3 |
| 9 | 13 | 1 | 4 |
| 10 | 15 | 1 | 4 |
| 11 | 14 | 1 | 4 |
| 12 | 11 | 2 | 4 |

When each sub-channel shows the SINR as shown in Table 1, sub-channels are grouped into group 1 (9, 10, 11), group 2 (2, 3, 12) and group 3 (1, 4, 5, 6, 7, 8). For three sub-channels belonging to group 1 of the highest SINR, the number of subcarriers per CQI sample is "1", i.e. CQIs of all the subcarriers are notified by 4 bits. In subcarriers of sub-channels belonging to group 2, the number of subcarries per CQI sample is "2", and a typical value of two grouped subcarriers is notified by 4 bits.
In subcarriers of sub-channels belonging to group 3, the number of subcarries per CQI sample is "2", and a typical value of two grouped subcarriers is notified by 3 bits.

As a result, the information amount concerning notification of CQI required in this Embodiment is 3(sub-channels)x64(subcarriers)x4(bits)+
3(sub-channels)x32(subcarriers)x4(bits)+
6(sub-channels)x32(subcarriers)x3(bits)=1347(bits).
In addition, since information that each sub-channel belongs to which group is required, 2x12=24 are added, and the information amount is 1371 bits. The compression rate in the case of this scheme is 1371/3072, and it is possible to reduce the information by more than 50%.

Further, for a sub-channel with extremely low SINR or the like, it is possible to reduce the information amount by notifying of the average CQI of all the subcarriers as a typical value, and concurrently, the transmission side is capable of specifying a sub-channel that the communication party does not desire its allocation.

This Embodiment shows the case that grouping is performed in descending order of SINR in grouping sub-channels. However, when a case is assumed that communications are desired using a plurality of sub-channels, there is a case that the frequency arrangements (herein, sub-channel numbers) with high SINR are not continuous, and the case is considered being not preferable as the system. In such a case, the following method is also considered, and described below using this Embodiment as an example.

First, a sub-channel number with the highest SINR is determined, and sub-channels on both sides of the sub-channel are grouped as group 1. In addition, when a sub-channel with the highest SINR is on the end side of the band, two sub-channels on the opposite side are selected. In this way, sub-channels belonging to group 1 are determined. Next, among sub-channels that are not selected, a sub-channel number with the highest SINR is determined, and sub-channels on both sides of the sub-channel are grouped as group 2. In addition, when a sub-channel with the highest SINR is on the end side of the band, or is an already selected sub-channel, two sub-channels on the opposite side are selected.

When three sub-channels are not selected even by including the opposite side, a sub-channel with the second high SINR is determined among sub-channels that are not selected as group 1, and group 2 is determined by the similar procedure. When group 2 is not determined by using the sub-channel with the second high SINR, a sub-channel that is first selected is changed, and the similar operation is repeated (in this Embodiment, group 2 is determined within three times at the maximum) until the determination can be made. Then, sub-channels that are not selected as groups 1 and 2 belong to group 3.

When grouping is performed by this procedure, in the case of Table 1, groups are group 1 (9, 10, 11), group 2 (1,2,3) and group 3 (4,5,5,7,8,12), and continuity of selected sub-channels is maintained in groups 1 and 2.

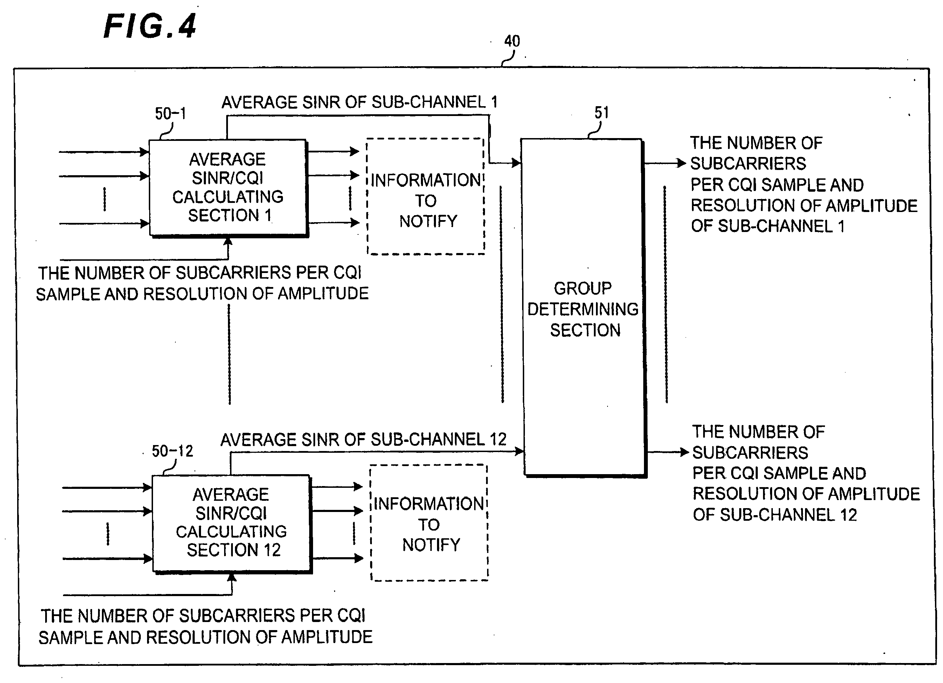

FIG. 4 is a block diagram showing details of the CQI estimating section according to this Embodiment. In addition, blocks are shown explicitly by function, and it is not meant that each block is always installed. As shown in FIG. 4, the CQI estimating section 40 is comprised of average SINR/CQI calculating sections 50-1 to 50-12 for each sub-channel and group determining section 51. A signal of each subcarrier is input to the average SINR/CQI calculating sections 50-1 to 50-12, and the average SINR is calculated. Further, the CQI is calculated according to the number of subcarriers per CQI sample and the resolution of amplitude input thereto. The average SINR is input to the group determining section 51, and a group of each sub-channel is determined. The group determining section 51 groups sub-channels by SINR, and outputs the number of subcarriers per CQI sample and the resolution of amplitude (the number of quantization bits of amplitude information) of each sub-channel to input to each of the average SINR/CQI calculating sections 50-1 to 50-12. The average SINR/CQI calculating sections 50-1 to 50-12 constitute the reception quality calculating section in the invention.

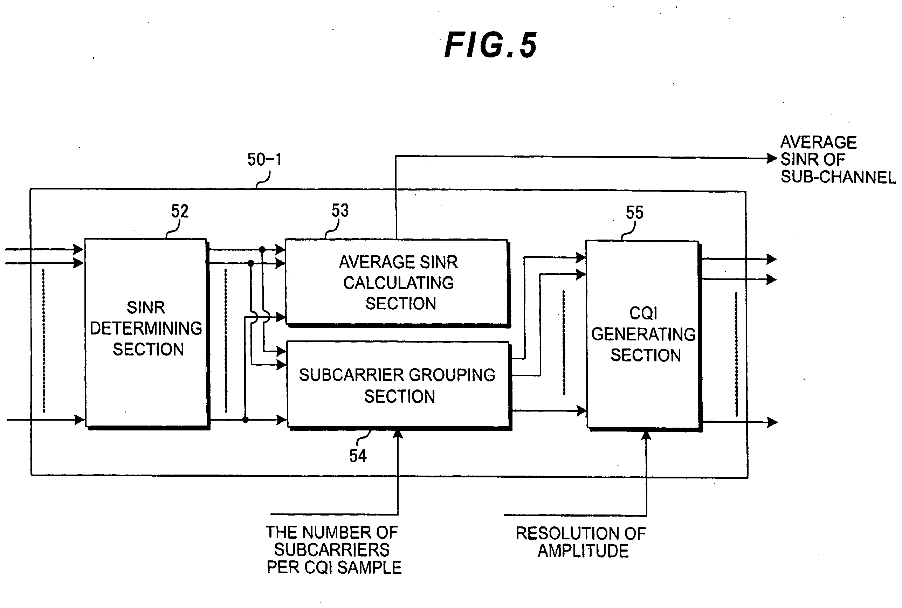

FIG. 5 is a block diagram showing details of the average SINR/CQI calculating section 50-1. As shown in FIG. 5, the average SINR/CQI calculating section 50-1 is comprised of an SINR determining section 52 for determining the SINR of each subcarrier, an average SINR calculating section 53 for calculating the average SINR of the entire sub-channel from an output of the SINR determining section 52, a subcarrier grouping section 54 for performing grouping of subcarriers by the number of subcarriers per CQI sample, and a CQI generating section 55 for generating CQI to notify based on the SINR of grouped subcarriers. By processing signals in such a configuration, it is possible to calculate the CQI information to notify with different information amounts for each sub-channel. The CQI generating section 55 constitutes the reception quality information generating section in the invention.

### (Embodiment 2)

This Embodiment describes a method of grouping sub-channels according to the sub-channel average SINR, varying the number of subcarriers per CQI sample for each group, and performing spatial transform on the CQI information to compress. The spatial transform method is predicated on DCT (Discrete Cosine Transform) as an example. DCT has the property that signal power concentrates on a low-frequency region of DCT output in performing DCT when a signal with correlation between adjacent samples to some extent such as CQI information is input. Therefore, there is a feature that it is possible to compress information required for CQI notification by using only the information of the low-frequency region of DCT output for CQI notification. The side for receiving the information naturally restores the information by IDCT (Inverse DCT). At this point, zero is substituted into IDCT inputs in which the information is not notified, thereby using IDCT with the same points as in DCT used in notifying the CQI, and it is thus possible to restore the CQI information.

In this Embodiment, the case is assumed that the transmission apparatus is capable of transmitting different data streams from two transmission antennas by MIMO technique. Accordingly, in the reception apparatus exist 24 sub-channels, and for the sake of convenience, sub-channels transmitted from one antenna are represented by "1" to "12", while sub-channels transmitted from the other antenna is represented by "13" to "24". In this Embodiment, four sub-channel groups are formed in descending order of SINR. It is assumed that 3, 6, 12 and 3 sub-channels are allocated sequentially.

Table 2 shows the average SINR of the sub-channel, interval of subcarriers to notify, and amplitude information of a terminal in some frame.

**[Table 2]**

| Sub-channel Number | Average SINR (dB) of Sub-channel | The number of Subcarriers per CQI Sample | Amplitude Information |
|---|---|---|---|
| 1 | 9 | 4 | 4 |
| 2 | 12 | 2 | 4 |
| 3 | 13 | 2 | 4 |
| 4 | 10 | 4 | 4 |
| 5 | 11 | 4 | 4 |
| 6 | 5 | - | - |
| 7 | 7 | 4 | 4 |
| 8 | 9 | 4 | 4 |
| 9 | 13 | 2 | 4 |
| 10 | 15 | 1 | 4 |
| 11 | 14 | 1 | 4 |
| 12 | 11 | 4 | 4 |
| 13 | 5 | - | - |
| 14 | 7 | 4 | 4 |
| 15 | 6 | - | - |
| 16 | 8 | 4 | 4 |
| 17 | 10 | 4 | 4 |
| 18 | 13 | 2 | 4 |
| 19 | 14 | 1 | 4 |
| 20 | 12 | 2 | 4 |
| 21 | 13 | 2 | 4 |
| 22 | 11 | 4 | 4 |
| 23 | 10 | 4 | 4 |
| 24 | 8 | 4 | 4 |

In the case that each sub-channel shows the SINR as shown in Table 2, sub-channels are grouped into group 1 (10, 11, 19), group 2 (2, 3, 9, 18, 20, 21), group 3 (1, 4, 5, 7, 8, 12, 14, 16, 17, 22, 23, 24) and group 4 (6, 13, 15). Further, "-" shown in frequency interval and amplitude information in last group 4 means that CQI of this sub-channel is not transmitted at all.

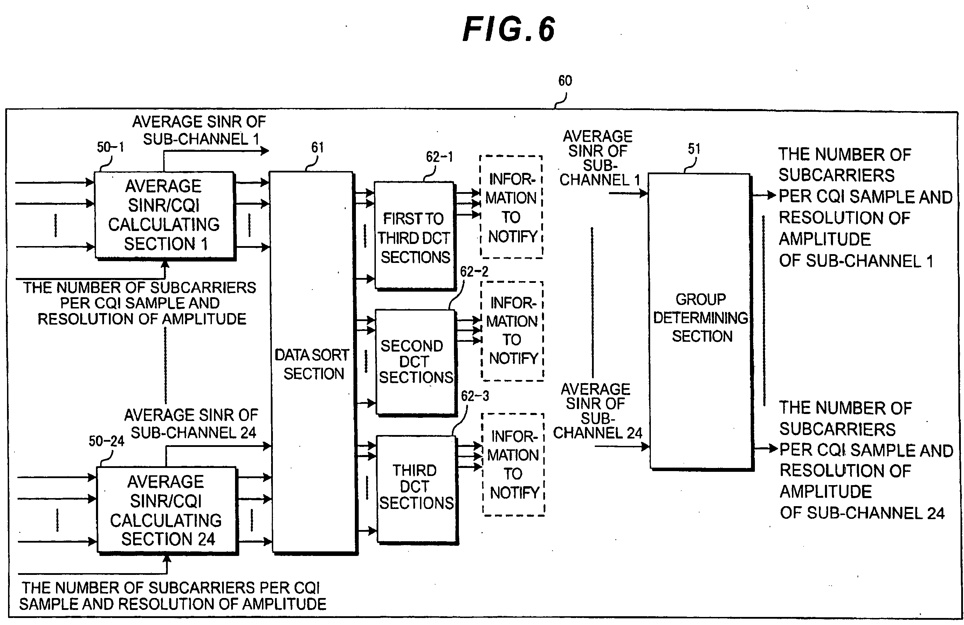

FIG. 6 is a block diagram showing details of the CQI estimating section (60) according to this Embodiment. In addition, blocks are shown explicitly by function, and it is not meant that each block is always installed. Further, blocks with the same functions as in FIG. 4 are assigned the same reference numerals to omit descriptions thereof.

The differences from the CQI estimating section (40) as shown in FIG. 4 are that the number of average SINR/CQI calculating sections is increased (50-1 to 50-24) with increases in the number of sub-channels, and that a data sort section 61 and first to third DCT sections 62-1 to 62-3 are added. Further, the resolution of amplitude of each sub-channel is the same, but can be set to differ. In addition, compression is performed on DCT-processed data, and does not directly contribute to compression efficiency. Further, the CQI information to actually notify is DCT-processed data, instead of outputs of the average SINR/CQI calculating sections 50-1 to 50-24.

The data sort section 61 has the function of allocating an output from each of the average SINR/CQI calculating sections 50-1 to 50-24 according to the group to which the sub-channel belongs to input to each of the first to third DCT sections 62-1 to 62-3. Herein, three DCT sections, 62-1 to 62-3, are described, but use in time division enables a single DCT section.

Described next is a method of performing DCT for each group to compress. For group 1, to the DCT computing section with 192 points are input CQI10 (k) (1≤k≤64) that is the CQI of 64 subcarriers of sub-channel 10, CQI11 (k) that is the CQI of 64 subcarriers of sub-channel 11, and CQI19(k) that is the CQI of 64 subcarriers of sub-channel 19, and DCT computing is performed. Similarly, DCT computing is performed for groups 2 and 3.

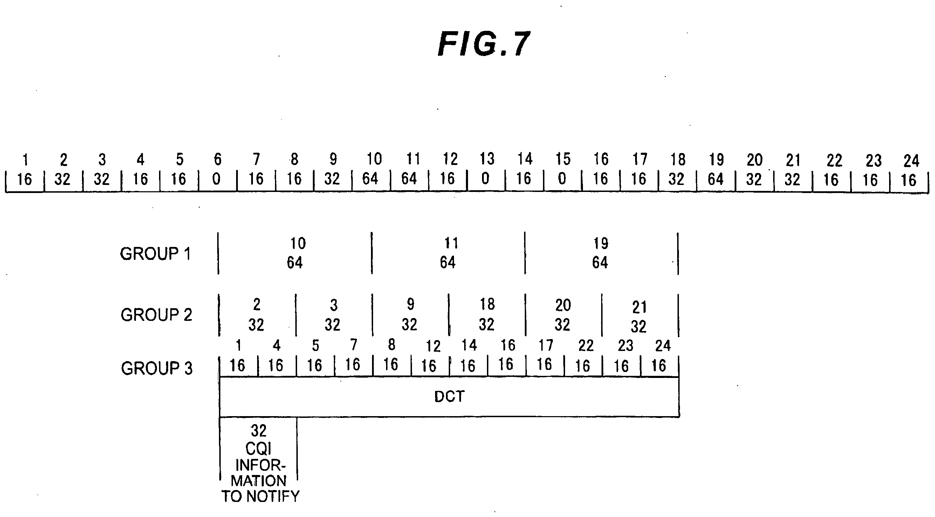

FIG. 7 is a diagram showing the relationship between the sub-channel number and the number of CQI samples to notify of the CQI in the sub-channel. In FIG. 7, the figure in the upper row indicates the sub-channel number, and the figure in the lower row indicates the number of CQI samples to notify of the CQI in this sub-channel. Since the maximum number of CQI samples is "64", "32" means that the number of subcarriers per CQI sample is "2", "16" means that the number of subcarriers per CQI sample is "4", and the typical value is notified as the CQI information.

FIG. 7 means that data of 192 samples is input to the first to third DCT sections 62-1 to 62-3 separately for groups 1 to 3. Then, it is meant that in any group, 32 samples in the low-frequency region are used among outputs. As described previously, since adjacent CQI information has correlation with each other to some extent, signal power concentrates on the low-frequency region in the output of DCT. Therefore, among the DCT output with 192 points, it is assumed that data of 32 points in the low-frequency region is represented by 8 bits to notify the transmission apparatus.

In this Embodiment, to simplify the circuit and processing as much as possible, grouping is performed so that the number of samples to notify of the CQI is constant in each group, but the subject matter of the invention is not limited thereto, and it is important that sub-channels where the number of CQI samples to notify in the sub-channel is the same are grouped, and that spatial transform (herein, DCT) is performed on the CQI information for each group to compress the information.

In the example shown herein, the data required after compression subsequent to spatial transform by DCT is 3(the number of groups)x32(the number of DCT output samples)x8(bits)=768 bits. In addition, information indicating that each sub-channel belongs to which group is necessary, data of 2 (bits: information amount for the number of groups)x24 (the number of sub-channels)=48 bits is further necessary, andintotal, 816 bits are required as an information amount to notify of CQI.

Meanwhile, when compression is not performed, required is 3072x2(the number of MIMO streams)= 6144 bits, the compression rate is 816/6144, and it is thus possible to compress the information amount of more than 80%. This Embodiment shows that sub-channels are grouped in descending order of SINR, but it is possible to perform grouping so that the number of subcarriers per CQI sample is the same or close in sub-channels continuous in the frequency region. In consideration of compression using DCT, since it is important that variations in input to DCT are small, the effect is further obtained that errors due to compression are smaller.

Moreover, indicated herein is the example where sub-channels transmitted from each antenna are handled separately, and in this case, operation is performed appropriately in the multi-user MIMO system (enabling different users to use sub-channels in the same frequency band transmitted from different antennas), but a problem arises in systems where sub-channels in the same frequency band can be used only by a single user. In such a case, communication efficiency is improved by devising so as not to mix cases of notifying or not notifying of the CQI of the sub-channel in the same frequency band by performing grouping of sub-channels using the average SINR of sub-channels in the same band, or always notifying the CQI of all the sub-channels.

In other words, it is meant that it is preferable to eliminate the state where the CQI of one of channels is notified, while the CQI of the other channel is not notified as in channels 6 and 18 when Table 2 shown in this Embodiment is used as an example. For example, in the case where the average SINR of sub-channels in the same frequency band is lower than the SINR of other sub-channels and the like, a method is considered that the CQI after combining such channels in the receiver is notified. By this means, it is possible to substantially reduce the number of sub-channels to notify and perform CQI notification with efficiency. Further, the method for notifying of the CQI of combining is applicable to the case in consideration of transmission diversity.

### (Embodiment 3)

In this method, as in Embodiment 2, sub-channels are grouped according to the sub-channel average SINR, the number of subcarriers per CQI sample is varied for each group, and spatial transform is performed on the CQI information to compress. The spatial transform method is predicated on DCT (Discrete Cosine Transform). In above-mentioned Embodiment 2, since DCT processing is performed every grouped sub-channels, even when the number of CQIs to notify in each group is the same, the DCT processing is required corresponding to the number of groups, and further, when the numbers of CQIs to notify are different in each group; it is necessary to make the DCT processing different. In the following, Table 2 used in Embodiment 2 is used as the SINR for each sub-channel in descriptions of this Embodiment.

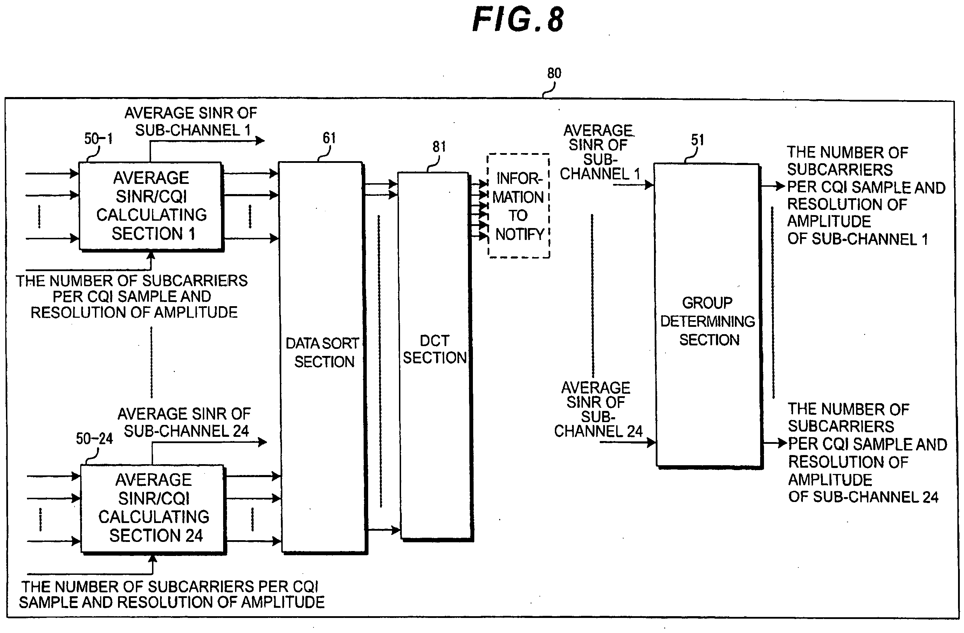

FIG. 8 is a block diagram showing details of the CQI estimating section according to this Embodiment. In addition, blocks are shown explicitly by function, and it is not meant that each block is always installed. Further, blocks with the same functions as in FIG. 6 are assigned the same reference numerals to omit descriptions thereof. As shown in FIG. 8, the function blocks are not different from those in FIG. 6, but the sort method in the data sort section 61 and the method of determining the number of subcarriers per CQI sample in the group determining section 51 are different. This Embodiment shows two data sort methods so as to perform the DCT processing once in a DCT section 81.

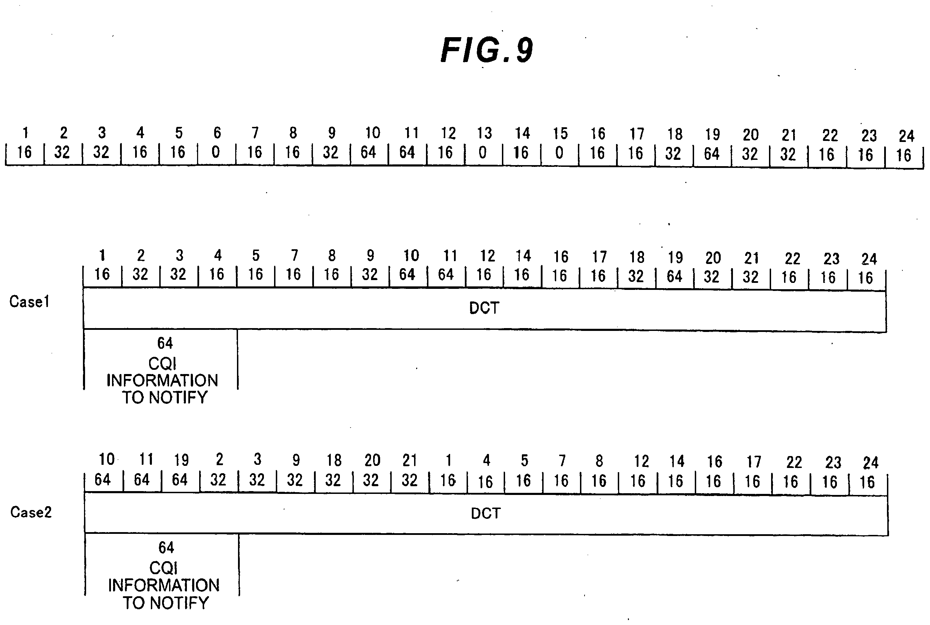

FIG. 9 is a diagram showing the relationship between the sub-channel number and the number of CQI samples to notify. The sub-channel number and the number of CQI samples to notify shown in the highest field in FIG. 9 are based on Table 2, and are the same as in FIG. 7. In FIG. 9, Case 1 shows a method of inputting CQI information except that of sub-channels which is not transmitted sequentially to DCT to perform DCT. The number of DCT points is "576" . Meanwhile, Case 2 shows a method of inputting to DCT in descending order (ascending order is also available) of the number of CQI samples to notify in the sub-channel to perform DCT. In both methods, it is assumed that 64 samples are represented by 8 bits in output.

By thus performing the DCT processing once, it is possible to notify of the CQI information of all the sub-channels intended to notify. Generally, the method of performing spatial transform on the CQI information using DCT to compress generates an error from the CQI to originally notify due to compression. However, as shown in this Embodiment, by performing spatial transform on the information of sub-channels where the numbers of subcarriers per CQI sample are different once to compress, although errors of a sub-channel with the high number of subcarriers per CQI sample increase, it is possible to reduce errors on a sub-channel with the low number of subcarriers per CQI sample. In other words, it is possible to reduce errors more on a sub-channel to be used in actual communications.

Further, as shown in Case 2, in inputting to DCT, by concentrating input positions of sub-channels belonging to each group, it is further possible to reduce compression errors of the sub-channel with the low number of subcarriers per CQI sample. In the example shown herein, the data required after compression subsequent to spatial transform by DCT is 64(the number of DCT output samples)x8(bits)=512 bits. In addition, information indicating that each sub-channel belongs to which group is necessary, data of 2(bits: information amount for the number of groups)x24(the number of sub-channels)=48 bits is further necessary, and in total, 560 bits are required as an information amount to notify of CQI. Meanwhile, when compression is not performed, required is 3072x2 (the number of MIMO streams)=6144 bits, the compression rate is 560/6144, and it is thus possible to compress the information amount of more than 90%.

### (Embodiment 4)

As in Embodiment 3, this Embodiment describes a method of grouping sub-channels, varying the number of subcarriers per CQI sample for each group, and performing spatial transform on the CQI information to compress. Herein, in performing grouping of sub-channels, this Embodiment shows an example in the case of considering sub-channels being currently used in communications, as well as SINR criterion. As in above-mentioned Embodiments, the spatial transform method is predicated on DCT (Discrete Cosine Transform).

This Embodiment shows an example where "a sub-channel desired to be used in communications as much as possible" is determined, the number of subcarriers per CQI sample is decreased in the determined sub-channel, and with reference to the sub-channel, the number of subcarriers per CQI sample is increased. Herein, as a definition of "a sub-channel desired to be used in communications as much as possible", included are two sub-channels of a sub-channel used in communications in the last frame and another sub-channel with the highest SINR except the sub-channel.

**[Table 3]**

| Sub-channel Number | Average SINR (dB) of Sub-channel | The number of Subcarriers per CQI Sample | Amplitude Information |
|---|---|---|---|
| 1 | 9 | 2 | 4 |
| 2 (Used last time) | 13 | 1 | 4 |
| 3 | 12 | 2 | 4 |
| 4 | 10 | 4 | 4 |
| 5 | 11 | 4 | 4 |
| 6 | 5 | 4 | 4 |
| 7 | 7 | 4 | 4 |
| 8 | 9 | 4 | 4 |
| 9 | 13 | 2 | 4 |
| 10 | 15 | 1 | 4 |
| 11 | 14 | 2 | 4 |
| 12 | 11 | 4 | 4 |

Table 3 shows the relationship between the SINR of the sub-channel and the number of subcarriers per CQI sample. The relationship between the SINR and sub-channel is the same as in Table 1 used in Embodiment 1. Since the sub-channel used in the last frame is assumed to be "2", the number of subcarriers per CQI sample of sub-channel 2 is "1" . Further, since the sub-channel with the highest SINR is "10", the number of subcarriers per CQI sample of sub-channel 10 is also "1". The number of subcarriers per CQI sample is "2" in sub-channels 1, 3, 9 and 11 adjacent to two sub-channels, 2 or 10, and the number of subcarriers per CQI sample is "4" in the other sub-channels.

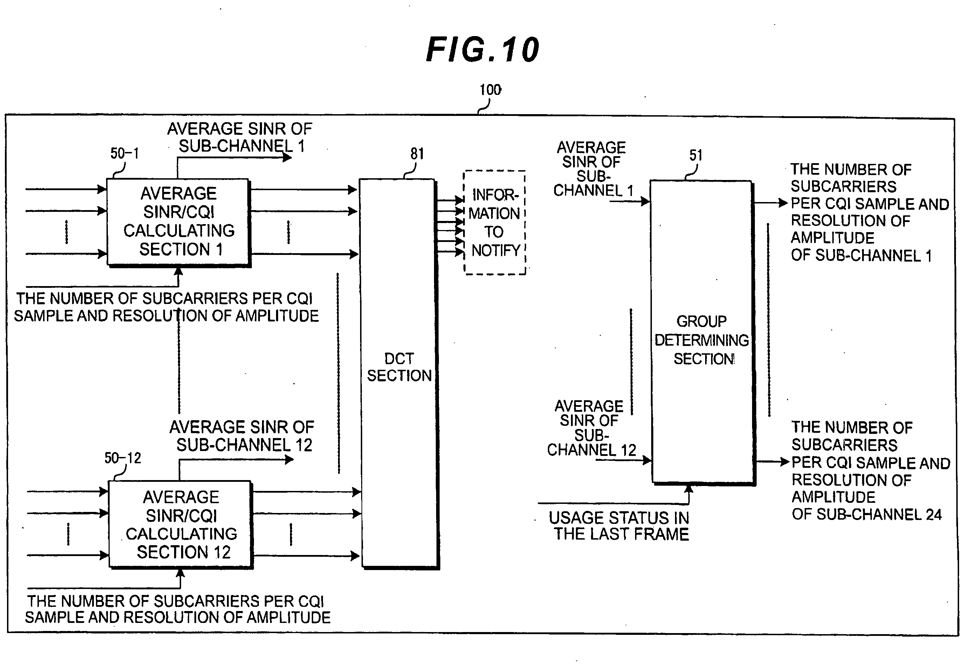

FIG. 10 is a block diagram showing details of the CQI estimating section according to this Embodiment. In addition, blocks are shown explicitly by function, and it is not meant that each block is always installed. Further, blocks with the same functions as in FIG. 8 are assigned the same reference numerals to omit descriptions thereof. As shown in FIG. 10, the function blocks are not different, and channel usage status in the last frame is input to the group determining section 51. In other words, it is indicated that channel usage status in the last frame is taken into consideration in performing grouping of sub-channels. Further, there is no data sort section, and it is meant that the CQI information obtained in each sub-channel is input to the DCT section sequentially.

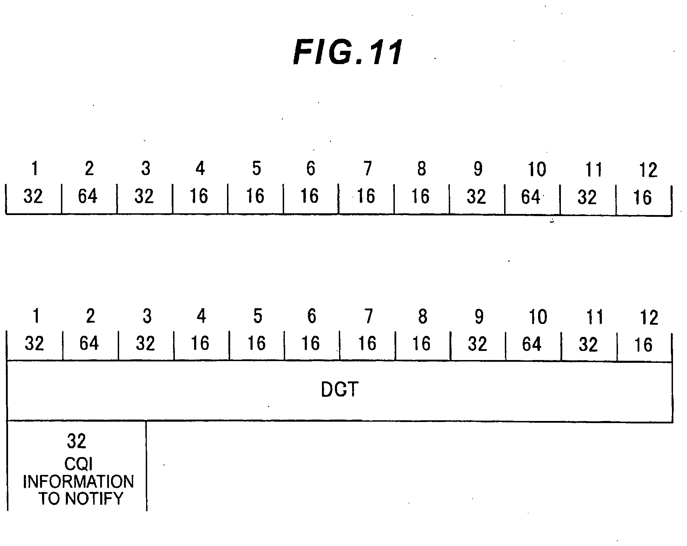

FIG. 11 is a diagram showing the relationship between the sub-channel number and the number of CQI samples to notify in this Embodiment. The sub-channel number and the number of subcarriers to notify in the highest field in FIG. 11 are based on Table 3. In this example, the number of DCT points is "336". By thus performing DCT, since the CQI interval (the number of subcarrier groups) to notify between adjacent sub-channels is not changed abruptly, and the sub-channel numbers are continuous, variations in CQI are moderate, and compress errors are small.

In the example shown herein, the data required after compression subsequent to spatial transform by DCT is, 32 (the number of DCT output samples) x8 (bits) =256 bits . In addition, information indicating that each sub-channel belongs to which group is necessary, data of 2(bits: information amount for the number of groups)x12 (the number of sub-channels)=2 bits is further necessary, and in total, 280 bits are required as an information amount to notify of CQI. Meanwhile, when compression is not performed, 3072 bits are required, the compression rate is 280/3072, and it is thus possible to compress the information amount of more than 90%.

### (Embodiment 5)

This Embodiment describes a scheduling method and adaptive modulation method in the transmission apparatus when the CQI information is notified as described in Embodiments 1 to 4. To simplify the description, it is assumed that the number of terminals to communicate in a frame is "12" (the same as the total number of sub-channels), and that a single sub-channel is occupied by a single terminal. Accordingly, scheduling shown herein indicates what sub-channel is allocated to each of 12 terminals to allocate in a frame. Further, notification of CQI is assumed to be made using the format in accordance with Embodiment 4. Accordingly, sub-channels are divided into three groups on the notification method of CQI.

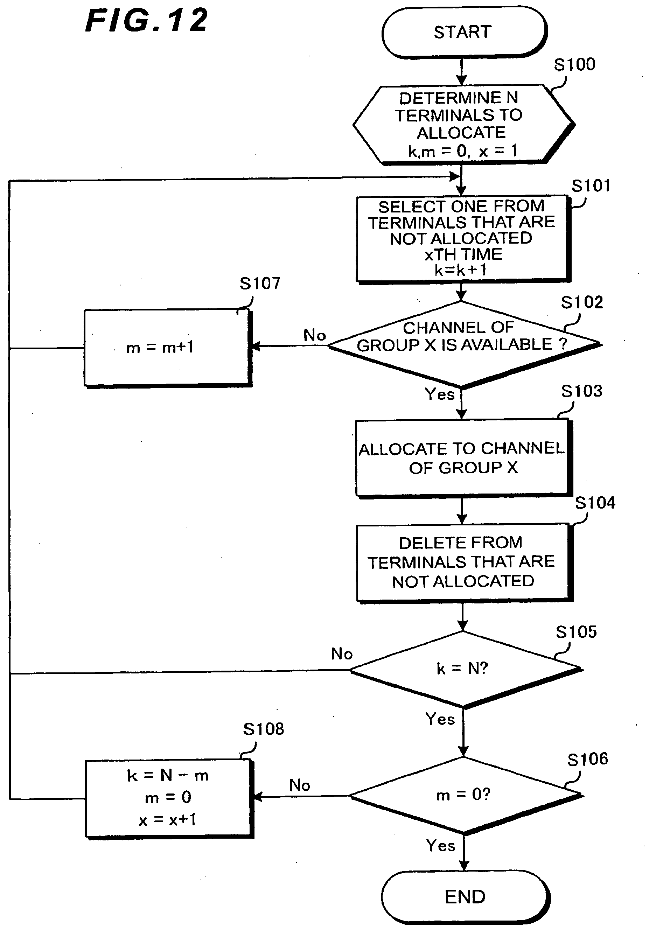

FIG. 12 is a flowchart illustrating operations in scheduling. In FIG. 12, S100 is a step of selecting a terminal for transmission in a frame and initializing parameters k, m and x (k=0, m=0 and x=1), and S101 is a step of selecting one from terminals to which sub-channels are not allocated in the xth allocation operation, and incrementing k by one. Further, S102 is a step of checking whether any of sub-channels belonging to the group x of the terminal selected in S101 is available, and S103 is a step of making allocation when it is determined there is an available sub-channel in S102.

S104 is a step of deleting the selected terminal from allocation targets, and S105 is a step of determining whether k coincides with the number of all the terminals to allocate (N in the figure, N=12 in this Embodiment). S106 is a step of checking whether any terminal remains to which a sub-channel is not allocated by variable m. Further, when it is determined there is no available sub-channel belonging to the group x of the selected terminal in S102, m is incremented by one in S107, and the processing flow returns to S101. Also when k does not coincide with the number of all the terminals to allocate in S105, the processing flow returns to S101. Further, when m=0 does not hold in S106, since it is indicated that a terminal that is not allocated remains after trying allocation of all the terminals, it is set that k=N-m (by this means, k is the number of allocated terminals), m=0 and that x=x+1 in S108, and the processing flow returns to S101. By such operations, it is possible to allocate sub-channels to all the terminals selected in S100.

The method shown herein is an example of scheduling, and it is an important point to allocate terminals to sub-channels with as much CQI information as possible when the CQI is notified using the different number of subcarriers per CQI sample for each sub-channel.

Next, to specifically describe the scheduling method shown in this Embodiment, Table 4 shows the relationship between the CQI of each terminal notified to the transmission apparatus in some frame and the sub-channel. Table 4 shows the case where terminals A to H have communicated already in the last frame, and it is assumed that communications have been performed in the sub-channel shown at the beginning of respective group 1.

**[Table 4]**

| Terminal Identity | Group 1 | Group 2 | Group 3 |
|---|---|---|---|
| A | 2, 6 | 1, 3, 5, 7 | 4, 8, 9, 10, 11, 12 |
| B | 4, 9 | 2, 3, 8, 10 | 1, 5, 6, 7, 11, 12 |
| C | 5, 6 | 4, 7 | 1, 2, 3, 8, 9, 10, 11, 12 |
| D | 7, 3 | 2, 4, 6, 8 | 1, 5, 9, 10, 11, 12 |
| E | 8, 10 | 7, 9, 11 | 1, 2, 3, 4, 5, 6, 12 |
| F | 10, 1 | 2, 9, 11 | 3, 4, 5, 6, 7, 8, 12 |
| G | 11, 5 | 4, 6, 10, 12 | 1, 2, 3, 7, 8, 9 |
| H | 12, 8 | 7, 9, 11 | 1, 2, 3, 4, 5, 6, 10 |
| I | 4, 10 | 3, 5, 9, 11 | 1, 2, 6, 7, 8, 12 |
| J | 6, 11 | 5, 7, 10, 12 | 1, 2, 3, 4, 8, 9 |
| K | 4, 11 | 3, 5, 10, 12 | 1, 2, 6, 7, 8, 9 |
| L | 2, 10 | 1, 3, 9, 11 | 4, 5, 6, 7, 8, 12 |

Not shown in FIG. 12, but it is assumed that terminals performing communications in the last frame are preferentially selected in S101, and are allocated to sub-channels used in the last frame in S103, as long as there is a significant difference between SINRs.

When terminals as shown in Table 4 are allocated according to the flowchart shown in FIG. 12, in a loop of x=1, A is allocated to 2, B is allocated to 4, C is allocated to 5, D is allocated to 7, E is allocated to 8, F is allocated to 10, G is allocated to 11, H is allocated to 12, and thus allocation is made according to the priority that communications have been performed in the last frame. In this stage, k=8 and m=0. Next, it is desired to allocate I to 4 or 10, but both sub-channels are already used. Therefore; m=1 is set in S107, and the processing flow returns to S101. J is allocated to 6. Sub-channels belonging to groups 1 of remaining K and L are already allocated, and in the step of k=12 in S105, the processing flow shifts to S106. Since three terminals are not allocated in this step, m is "3" (m=3), and the processing flow shifts to S108. In step S108 it is set that k=9, m=0 and that x=2, the processing flow returns to S101, and allocation is made to terminals I, K and L that are not allocated yet. When the flow thus proceeds sequentially, in a loop of x=2, 3 is allocated to I, while 1 is allocated to L, and in a loop of x=3, 9 is allocated to J.

Thus, although not completely, by allocating terminals to sub-channels with as much CQI sample information as possible, accuracy of sub-channel adaptive modulation is enhanced, and communication efficiency is improved. Further, in this Embodiment, since the CQI information of sub-channels belonging to group 1 is notified using all the subcarriers in each terminal, it is possible to perform adaptive modulation for each subcarrier. Accordingly, when allocation is made to terminals shown in Table 4 according to the flowchart as shown in FIG. 12, it is possible to perform subcarrier adaptive modulation in terminals A to H and J. Meanwhile, in the sub-channels belonging to group 2 (terminals L and I) and group 3 (terminal J), the CQI is notified using two or four subcarriers per CQI sample. Accordingly, in terminals for which such sub-channels are selected, it is possible to perform subcarrier group adaptive modulation using the respective number of subcarriers per CQI sample, and although less than subcarrier adaptive modulation, communication efficiency is improved.

In the foregoing, all the Embodiments show examples of dividing frequencies into sub-channels and varying the information amount of CQI, but it is not always necessary to divide using sub-channels, and it is possible to divide using a plurality of sub-channels as a group, or to divide the frequency region to vary the CQI information amount without any correlation with the sub-channel at all.

## Claims

1. A communication apparatus comprising:
a reception section (31-38) that receives a signal transmitted by two or more frequency channels, wherein a first frequency channel of the two or more frequency channels does not overlap with a second frequency channel of the two or more frequency channels on a frequency domain;
a reception quality calculating section (50-1...50-24) that calculates a channel quality indicator, CQI, of each group of each of the first frequency channel and the second frequency channel, each of the first frequency channel and the second frequency channel being divided into two or more groups by the number of consecutive subcarriers that is independently set for each of the first frequency channel and the second frequency channel; and
a transmission section (10-17) that transmits information including the calculated CQI ,
wherein
the reception quality calculating section (50-1...50-24) calculates a Signal and Interference and Noise power Ratio, SINR, the SINR indicating a reception quality of an entire frequency channel of each of the first frequency channel and the second frequency channel, and
the transmission section transmits the information not including the calculated CQI of a group for which no amplitude information of the subcarriers is available.

2. A reception quality information generating method including at least the steps of:
receiving a signal transmitted by two or more frequency channels, wherein a first frequency channel of the two or more frequency channels does not overlap with a second frequency channel of the two or more frequency channels on a frequency domain;
calculating a channel quality indicator, CQI, of each group of each of the first frequency channel and the second frequency channel, each of the first frequency channel and the second frequency channel being divided into two or more groups by the number of consecutive subcarriers that is independently set for each of the first frequency channel and the second frequency channel;
calculating a Signal and Interference and Noise power Ratio, SINR, the SINR indicating a reception quality of an entire frequency channel of each of the first frequency channel and the second frequency channel; and
transmitting information including the calculated CQI, wherein the information does not include the calculated CQI of a group for which no amplitude information of the subcarriers is available.

## Patentansprüche

1. Kommunikationsvorrichtung, umfassend:
einen Empfangsbereich (31-38), der ein über zwei oder mehr Frequenzkanäle übertragenes Signal empfängt, wobei ein erster Frequenzkanal der zwei oder mehr Frequenzkanäle mit einem zweiten Frequenzkanal der zwei oder mehr Frequenzkanäle auf einer Frequenzdomäne nicht überlappt;
einen eine Empfangsqualität berechnenden Bereich (50-1, ... 50-24), der eine Kanalqualitätsanzeige CQI jeder Gruppe von jedem des ersten Frequenzkanals und des zweiten Frequenzkanals berechnet, wobei jeder des ersten Frequenzkanals und des zweiten Frequenzkanals in zwei oder mehr Gruppen durch die Anzahl von aufeinanderfolgenden Subcarriern geteilt wird, die für jeden des ersten Frequenzkanals und des zweiten Frequenzkanals unabhängig eingestellt wird; und
einen Übertragungsbereich (10-17), der eine die berechnete CQI enthaltende Information überträgt,
wobei
der eine Empfangsqualität berechnende Bereich (50-1.... 50-24) ein Signal-Interferenz-Rausch-Leistungsverhältnis SINR berechnet, wobei das SINR eine Empfangsqualität eines ganzen Frequenzkanals von jedem des ersten Frequenzkanals und des zweiten Frequenzkanals angibt, und
der Übertragungsbereich die Information überträgt, die die berechnete CQI einer Gruppe, für welche keine Amplitudeninformation der Subcarrier zur Verfügung steht, nicht enthält.

2. Empfangsqualitätsinformation erzeugendes Verfahren, das zumindest die Schritte umfasst:
Empfangen eines über zwei oder mehr Frequenzkanäle übertragenen Signals, wobei ein erster Frequenzkanal der zwei oder mehr Frequenzkanäle mit einem zweiten Frequenzkanal der zwei oder mehr Frequenzkanäle auf einer Frequenzdomäne nicht überlappt;
Berechnen einer Kanalqualitätsanzeige CQI jeder Gruppe von jedem des ersten Frequenzkanals und des zweiten Frequenzkanals, wobei jeder des ersten Frequenzkanals und des zweiten Frequenzkanals in zwei oder mehr Gruppen durch die Anzahl von aufeinanderfolgenden Subcarriern geteilt wird, die für jeden des ersten Frequenzkanals und des zweiten Frequenzkanals unabhängig eingestellt wird;
Berechnen eines Signal-Interferenz-Rausch-Leistungsverhältnisses SINR, wobei das SINR eine Empfangsqualität eines ganzen Frequenzkanals von jedem des ersten Frequenzkanals und des zweiten Frequenzkanals angibt, und
Übertragen einer die berechnete CQI enthaltenden Information, wobei die Information die berechnete CQI einer Gruppe, für welche keine Amplitudeninformation der Subcarrier zur Verfügung steht, nicht enthält.

## Revendications

1. Appareil de communication comprenant :
une section de réception (31-38) qui reçoit un signal transmis par deux canaux de fréquences ou plus, un premier canal de fréquence, parmi ces deux canaux de fréquence ou plus, n'empiétant pas sur un deuxième de ces canaux de fréquence sur un domaine fréquentiel ;
une section de calcul de qualité de réception (50-1...50-24) qui calcule un indicateur de qualité de canal, CQI, de chaque groupe de chacun des premier et deuxième canaux de fréquence, chacun des premier et deuxième canaux de fréquence étant divisé en deux groupes ou plus par le nombre de sous-porteuses consécutives qui est fixé indépendamment pour chacun des premier et deuxième canaux de fréquence ; et
une section de transmission (10-17) qui transmet des informations contenant le CQI calculé,
la section de calcul de qualité de réception (50-1..50-24) calculant un rapport signal sur interférence plus bruit, SINR, le SINR indiquant une qualité de réception d'un canal 'de fréquence entier de chacun des premier et deuxième canaux de fréquence, et
la section de transmission transmettant les informations ne contenant pas le CQI calculé d'un groupe pour lequel aucune information d'amplitude des sous-porteuses n'est disponible.

2. Procédé pour générer des informations de qualité de réception, comprenant au moins les étapes :
de réception d'un signal transmis par deux canaux de fréquence ou plus, un premier canal de fréquence, parmi ces deux canaux de fréquence ou plus, n'empiétant pas sur un deuxième de ces canaux de fréquence sur un domaine fréquentiel ;
de calcul d'un indicateur de qualité de canal, CQI, de chaque groupe de chacun des premier et deuxième canaux de fréquence, chacun des premier et deuxième canaux de fréquence étant divisé en deux groupes ou plus par le nombre de sous-porteuses consécutives qui est fixé indépendamment pour chacun des premier et deuxième canaux de fréquence ;
de calcul d'un rapport signal sur interférence plus bruit, SINR, le SINR indiquant une qualité de réception d'un canal de fréquence entier de chacun des premier et deuxième canaux de fréquence ; et
de transmission d'informations contenant le CQI, les informations ne contenant pas le CQI calculé d'un groupe pour lequel aucune information d'amplitude des sous-porteuses n'est disponible.
